# EUROPÄISCHE PATENTANMELDUNG

(11) **EP 1 148 322 A1**
(43) Veröffentlichungstag der Anmeldung: **24.10.2001**
(21) Anmeldenummer: 00107983.9
(22) Anmeldetag: 18.04.2000
(51) Int. Cl.: G01J 3/46

(54) **Verfahren zur Erzeugung einer elektronischen Farbinformationsdatei und Verfahren zur Farbkommunikation**

(71) Anmelder: Gretag-MacBeth AG, 8105 Regensdorf (CH)
(72) Erfinder: Senn,Thomas, 8157 Dielsdorf (CH); Braun,Thorsten, 48432 Rheine (DE); Greter,Simon, 8055 Zürich (CH); Lamy,Francis, Mamaronck, NY 10543 (US)
(74) Vertreter: Schwabe - Sandmair - Marx

(57) **Zusammenfassung**

Für die Kommunikation von Farben wird in einem Rechner eine Farbinformationsdatei erzeugt, welche alle möglichen zu einem oder mehreren Farbmustern gehörenden und diese identifizierenden, charakterisierenden oder ergänzenden Informationsdaten enthalten kann. Die Informationsdaten werden als Datenobjekte in einer offenen und erweiterbaren hierarchisch gegliederten Objektstruktur auf XML-Basis in Textform in der Farbinformationsdatei abgespeichert. Durch die Einbettung der Datenobjekte in einen XML-Container ist es möglich, Farbmuster mittels beliebiger und unterschiedlicher Kombinationen von Informationsdaten zu charakterisieren und wahlfrei ergänzende bildliche oder textliche Informationen hinzuzufügen. Die Erstellung der Farbinformationsdatei erfolgt mit Hilfe eines Texteditors oder einer Composer Software mit z.B. grafischer Benutzeroberfläche. Zum Lesen der Farbinformationsdatei und zur Interpretation der darin abgespeicherten Informationsdaten ist eine Viewer Software vorgesehen.

## Beschreibung

Die Erfindung betrifft ein Verfahren zur Erzeugung einer für die Farbkommunikation bestimmten und geeigneten elektronischen Farbinformationsdatei gemäss dem Oberbegriff des unabhängigen Anspruchs 1. Die Erfindung betrifft auch ein Verfahren zur Kommunikation der für den visuellen Farbeindruck relevanten Information eines mindestens ein Farbmuster enthaltenden Farbmustersatzes gemäss dem Oberbegriff des unabhängigen Anspruchs 21.

Standardisierte Farbkommunikation ist seit Jahren ein Thema. Farbkommunikation erfolgt heute typischerweise über Messgrössen der Farben. Es handelt sich dabei einerseits um klassische farbmetrische Messgrössen der zu übermittelnden Farbe wie CIE-Lab-, XYZ-, RGB-, Dichte-, CMYK- oder anderseits um spektrale Messwerte.

Ein wesentlicher Aspekt bei der Farbkommunikation liegt in der Unterscheidung, ob geräteabhängige oder geräteunabhängige Farbräume verwendet werden. Falls geräteabhängige Farbräume verwendet werden, erlauben den Bildern bzw. Eingabe- und Ausgabegeräten zugewiesene Farbprofile dennoch eine präzise Farbkommunikation. Die entsprechenden Mechanismen wurden beispielsweise durch das ICC (International Color Consortium) definiert. Die gerätespezifischen Farbräume werden dabei durch sogenannte Geräteprofile spezifiziert. Der Aufbau eines solchen Geräteprofiles kann beispielsweise in der ICC Spezifikation "Spec ICC.1:1998-09" nachgelesen werden.

Die Anwendung dieser Messgrössen zur Übermittlung der Messdaten von Einzelfarben ("Spot Colors") bzw. von Farbtafeln oder -atlanten wird beispielsweise in der ANSI Norm IT8.7/2-1993 ("Graphic technology - Color reflection target for input scanner calibration") detailliert beschrieben. Darin wird insbesondere eine Möglichkeit aufgezeigt, wie verschiedene farbmetrische bzw. spektrale Messdaten von einzelnen Farbfeldern in ein Dateiformat gepackt werden können.

Andere Ansätze zur Farbkommunikation sind Farbfächer bzw. "Named color spaces". Typische Vertreter davon sind zum Beispiel Pantone, RAL, NCS, Toyo oder HKS Farbfächer. Dabei werden durch Farbmuster oder Messwerte definierte Farben feste Bezeichnungen zugeordnet. Diese Bezeichnungen werden dann entsprechend übermittelt.

Die menschliche Farbempfindung wird aber nicht nur durch die Messdaten der Farbe selbst, sondern ebenso durch Umfeldeinflüsse wie z. B. die absolute Helligkeit der Farbe, die benachbarten Farben u.s.w beeinflusst. In der CIE Publikation CIE 131-1998 ("The CIE 1997 interim colour appearance model (simple version) CIECAM 97s") und anderen Publikationen werden mathematische Modelle definiert, wie einige dieser Effekte mathematisch modelliert werden können.

Andere Effekte, welche die Farbempfindung beeinflussen, sind Oberflächeneffekte wie z. B. Glanzeffekte, die z. B. durch die Oberflächenbeschaffenheit der Farbe bzw. des Substrates definiert werden. Diese Effekte werden typischerweise durch Glanzmessgeräte entsprechend der Norm DIN 16537 erfasst.

Im weiteren sind richtungsabhängige Emissions- bzw. Remissionseffekte, wie sie z. B. in Metallic Lackierungen auftreten, bekannt. Diese Effekte werden typischerweise durch eine winkelabhängige Farbmessung mit einem Gonio Spektrophotometer erfasst. Eine Farbdefinition muss dann folglich durch mehrere Messwerte, die diese Winkelabhängigkeit repräsentieren, definiert werden.

Ein weiterer wichtiger Aspekt bei der Farbmessung ist das Substrat, auf das eine Farbe aufgetragen ist. Abhängig vom gewählten Substrat können zum Beispiel Fluoreszenzeffekte auftreten. Diese Fluoreszenzeffekt wird typischerweise durch die Verwendung von optischen Aufhellern ausgelöst. Um eine Aussage zu tätigen, unter welchen physikalischen Lichtquellen welche optisch sichtbaren Effekte auftreten, müssen deshalb Angaben zum Substrat vorliegen. Dies können zum Beispiel klassische Messgrössen wie Weiss- und Gelbgrad sein. Es könnte aber auch eine Messung von einem Doppelmonochromator Spektrophotometer vorliegen, mit dessen Hilfe das Substrat im Wellenlängenbereich von 360 nm bis 730 nm ausgemessen wird. Derartige Fluoreszenzeffekte können auch in der verwendeten Farbe selbst auftreten. Mit Hilfe einer geeigneten Messung, z. B. einer Messung mit einem Doppelmonochromator Spektrophotometer, können auch solche Effekte quantifiziert werden.

Ein weiterer wesentlicher Effekt für das Empfinden ist die Homogenität und Struktur der Farbvorlage. Diese Homogenität könnte zum Beispiel durch eine oder mehrere Abbildungen (eventuell aus verschiedenen Winkeln aufgenommen) aufgezeigt werden.

Wichtig für die Beurteilung von Farben ist im weiteren die Form, Grösse und Lage der Farbfelder zueinander. Form und Lage der Farben beeinflussen zum Beispiel den Simultankontrast der Farbfelder.

Ein weiterer Aspekt der Farbkommunikation ist der Einbezug von Farbtoleranzen. Farbtoleranzen können auf verschiedenste Arten definiert werden. In der Software-Applikation "ColorQuality" der Firma Gretag-Macbeth wird aufgezeigt, wie Farbmustern Toleranzen z.B. im CIE-Lab, CMC, FMCII oder anderen Farbräumen zugeordnet werden kann. Derartige Farbtoleranzen in entsprechenden Farbräumen müssen Farbmustern zugeordnet und bei der Farbkommunikation entsprechend übertragen werden können.

Ein weiterer wichtiger Aspekt in der Farbkommunikation ist der Einbezug der physikalischen Messbedingungen. Bekannt sind zum Beispiel die folgenden optischen Anordnungen zur Erfassung von spektralen und oder farbmetrischen Messdaten: 45/0 Grad Geometrie mit oder ohne Polarisator und wahlweise ausgerüstet mit einer D65- oder A-Licht Beleuchtung; Kugelgeometrie diffus / 8 Grad mit oder ohne Glanzfalle; Goniospektrophotometer mit mehreren Aufpick- und oder Beleuchtungswinkeln. Je nach Art der optischen Anordnung ergeben sich unterschiedliche Messwerte. Diese Messwerte können nur unter Einschränkungen der Allgemeinheit in Messwerte anderer physikalischer Anordnungen umgerechnet werden. Es ist daher unbedingt notwendig, die entsprechenden physikalischen Messbedingungen mit zu übertragen. Ein Ansatz, wie es prinzipiell möglich ist, diese Messbedingungen mit zu übertragen, wird zum Beispiel in der Software-Applikation "ColorQuality" der Firma Gretag-Macbeth aufgezeigt. Diese Messbedingungen können dabei von Messprobe zu Messprobe unterschiedlich sein.

Ein wesentlicher Aspekt der Farbkommunikation ist auch der Einbezug der Beleuchtungslichtarten. Das CIE hat zum Zweck der Farbdefinitionen verschiedene Beleuchtungslichtarten normiert (Z. Bsp. D65, D50, A, C, F1 .. F11). Je nach Art der Beleuchtungslichtquelle werden Remissionsfarbmuster anders beurteilt. Aus diesem Grund geben die meisten Farbmessgeräte und Farbmess-Softwarepakete die entsprechenden Beleuchtungslichtarten, die in der Berechnung von farbmetrischen Messgrössen verwendet worden sind, an. Im weiteren kann der Wunsch bestehen, dass Farben nicht nur unter den vorbeikonnten Beleuchtungslichtarten beurteilt werden sollen, sondern dass beliebige z. B. messtechnisch erfasste Beleuchtungslichtarten zur Farbbeurteilung verwendet werden sollten. Ein universelles Farbaustauschformat muss deshalb nicht nur Remissionsvorlagen, sondern auch mit Lichtquellen und anderen Emissionsstandards kommunizieren können, und diese Quellen in Relation zu den entsprechenden Remissionsvorlagen setzen.

Um eine Farbe richtig zu beschreiben, zu beurteilen und zu kommunizieren, müssen mehrere Aspekte einer Farbe definiert werden. Es reicht nicht aus, lediglich eine farbmetrische Grösse bzw. ein Spektrum der Farbe anzugeben. Speziell den oben beschriebenen übrigen für die Farbbeurteilung relevanten Aspekten, die im folgenden unter dem Begriff "Appearance" zusammengefasst sind, wird bei den heutigen Verfahren zur Farbkommunikation keine Beachtung geschenkt.

Je nach Anwendungsfall sind bei der Farbkommunikation verschieden Aspekte/Attribute (Messwerte, Beschreibungen) für die korrekte Farbspezifikation wichtig. Ein Datenaustauschformat für Farben muss dies berücksichtigen.

Die heute bekannten Datenaustauschformate, wie z. B. das IT8 Format, basieren im wesentlichen auf einer tabellarischen Darstellung von Messwerten (z. B. Spektren oder farbmetrischen Werten). Dabei werden zu jedem Farbmuster tabellarisch z. B. die Bezeichnung, ein oder mehrere farbmetrische Messwerte oder Spektren etc. aufgelistet. Diese Art der Speicherung bzw. Übermittlung stösst an Grenzen, sobald nicht zu jeder Farbprobe die gleiche Art von Messgrössen oder von weiteren zugeordneten Attributen wie z. B. Farbrezepten, Bildern u.s.w. gespeichert werden. Bei Verwendung des klassischen Ansatzes von Tabellen zur Speicherung dieser Objekte müsste dabei für jedes neu dazukommende Attribut die entsprechende Tabelle um eine oder mehrere Spalten erweitert werden. Dies würde zu grossen und unübersichtlichen Tabellen führen. Sehr viele Datenfelder in einer derartigen Tabelle wären dabei nicht belegt und stellten somit für die verarbeitenden Rechner einen unnötigen Ballast dar.

Das Ziel der Erfindung ist, ein Verfahren anzugeben, wie Farbdaten und zu diesen Farbdaten zugeordnete Grössen auf elektronischem Weg kommuniziert bzw. in zum Datenaustausch geeigneter Weise gespeichert werden können. Dabei sollen nicht nur farbmetrische Daten, sondern sämtliche für die Farbbeurteilung (Appearance) und sonstige für die genauere Identifikation oder Information nötigen Attribute einer Farbe bzw. eines Farbmusters übermittelt werden können. Ferner sollen dabei Farben ferner auf verschiedene Arten spezifiziert und diese Spezifikationen allen möglichen Software-Anwendungen zur Verfügung gestellt werden können, so dass der Anwender wählen kann, welche Aspekte der Farbdefinition er in seiner Anwendung verwenden will.

Generell ist denkbar, dass je nach Anwendung nicht nur für die Farbe bzw. Appearance notwendige Grössen zur Farbe gespeichert bzw. kommuniziert werden müssen, sondern auch andere Informationen wie z. B. Farbrezepte, Flächendeckungen für die Aufrasterung von Farben, Preise, Gewichte oder beliebige weitere Informationen, die in irgend einer Anwendung von Nutzen sein können, zusammen mit den eigentlichen Farbdaten im engeren Sinn gespeichert bzw. kommuniziert werden müssen Das erfindungsgemässe Verfahren soll auch mit dieser Situation zurechtkommen.

Im allgemeinen können die eventuell in irgendeiner Applikation wünschenswert erscheinenden Attribute nicht schon von vorneherein ein für alle Mal bei der Definition des Farbaustauschformates festgelegt werden. Das erfindungsgemässe Verfahren muss deshalb universell und offen bzw. erweiterbar ausgelegt sein, so dass für neu hinzukommende Anwendungen neue Attribute dem Datenaustauschformat hinzugefügt werden können bzw. das Datenaustauschformat entsprechend erweitert werden kann. Diese neuen zusätzlichen Attribute dürfen dabei die Anwendbarkeit der bereits bekannten Attribute in anderen Anwendungen nicht beeinflussen (Rückwärtskompatibilität).

Für die Kommunikation von Farbdaten und zugehörigen Grössen ist es auch von Wichtigkeit, dass das dazu benutzte Datenaustauschformat nicht an bestimmte Software-Hersteller gebunden ist, sondern durch Fremdhersteller von Software erweitert werden kann. Dabei sollten die bekannten Informationen durch die bisherigen Anwendungen immer noch interpretierbar bleiben, während die neu hinzugekommenen Informationen natürlich nur durch die neue, fremdherstellerspezifische Anwendung unterstützt werden.

Das erfindungsgemässe Verfahren zur Erzeugung einer Farbinformationsdatei und das erfindungsgemässe Verfahren zur Farbkommunikation, welche dieser komplexen Problemstellung genügen, sind in den unabhängigen Ansprüchen 1 und 21 definiert. Besonders vorteilhafte Ausgestaltungen und Weiterbildungen sind Gegenstand der jeweils abhängigen Ansprüche.

Im folgenden wird die Erfindung anhand eines bevorzugten Ausführungsbeispiels in Verbindung mit der Zeichnung näher erläutert. In dieser zeigen
- Fig. 1: ein Prinzipschema des erfindungsgemässen Verfahrens zur Erzeugung einer Farbinformationsdatei,

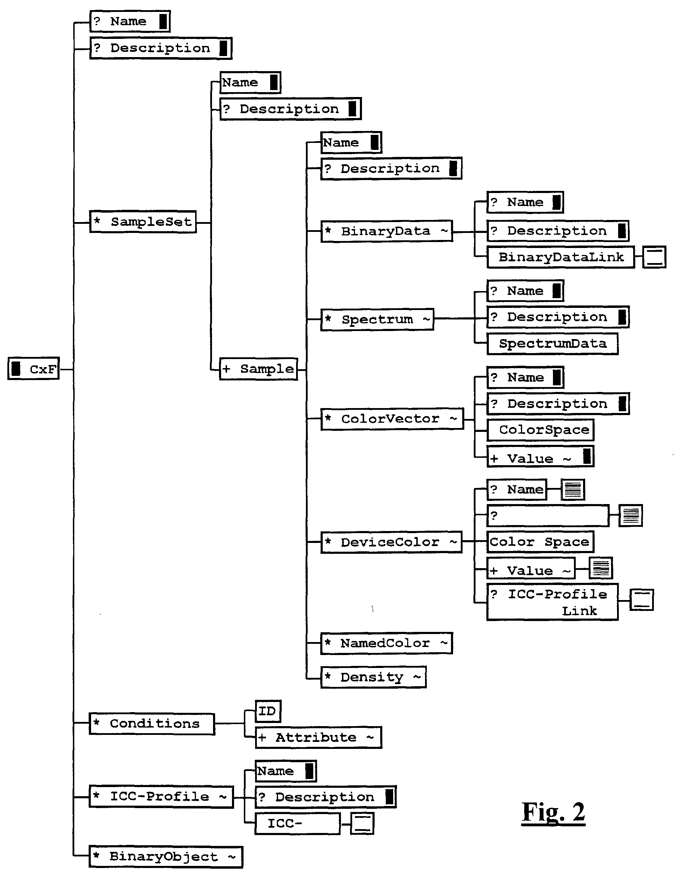

- Fig. 2: eine graphische Repräsentation eines Datenaustauschformats, wie es im erfindungsgemässen Verfahren zum Einsatz kommt, und
- Fig. 3: ein Prinzipschema des erfindungsgemässen Farbkommunikationsverfahrens.

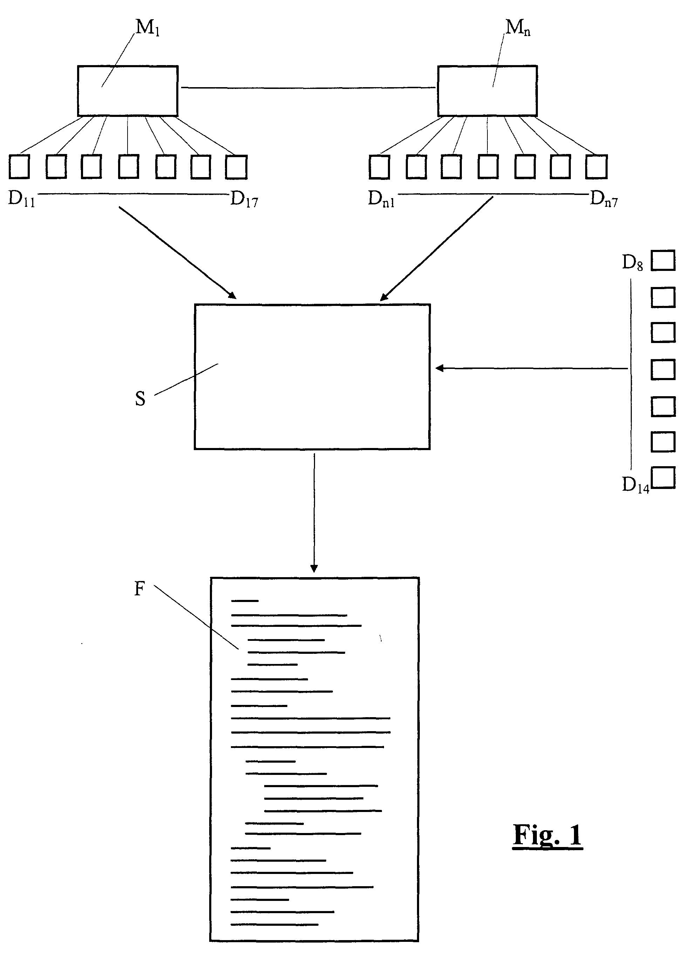

Wie schon einleitend ausgeführt, lässt sich der Farbeindruck eines Farbmusters durch eine Reihe von Eigenschaften (Attributen) beschreiben und durch entsprechende Informationsdaten repräsentieren. Zu diesen Eigenschaften gehören insbesondere spektrale oder colorimetrische Messgrössen sowie verschiedene für die sog. Appearance relevante Grössen bzw. Angaben etc.. In Figur 1 ist ein aus einer Anzahl von Farbmustern M₁ - Mₙ bestehender beispielsweiser Farbmustersatz dargestellt, wobei die die Farbmuster charakterisierenden Informationsdaten durch Kästchen D₁₁ - D₁₇ .... Dₙ₁-Dₙ₇ symbolisiert sind. Durch weitere Kästchen D₈ - D₁₄ sind ergänzende Informationsdaten symbolisiert, wie z.B. Messbedingungen, Beleuchtungslichtart, Substrateigenschaften, ICC-Profile oder sonstige interessierende Angaben und Informationen. Näheres ist der Einleitung und den nachstehenden Erläuterungen zu entnehmen.

Die Gesamtheit dieser zu den Farbmustern gehörenden und diese identifizierenden, charakterisierenden oder ergänzenden Informationsdaten wird in einem Rechner zur Verfügung gestellt und dort mittels einer unterstützenden Software Sₛ zu einer Farbinformationsdatei F verarbeitet. Unter "zur Verfügung gestellt" ist zu verstehen, dass die Informationsdaten durch Messung am körperlichen Farbmuster oder durch manuelle Eingabe in textueller oder mittels grafischer Benutzer-Interfaces erzeugt und im Rechner als entsprechende Daten bereitgestellt werden können.

Gemäss dem grundlegenden Aspekt der Erfindung werden die Informationsdaten dabei als die Informationsdaten enthaltende Datenobjekte in einer offenen und erweiterbaren hierarchisch gegliederten Objektstruktur in der Farbinformationsdatei F abgespeichert. Jedes Datenobjekt wird mit einer dieses charakterisierenden Typ-Bezeichnung (Tag) aus einer vordefinierten Menge von Typ-Bezeichnungen (Tags) bezeichnet, wobei die Typ-Bezeichnung Aufschluss über Struktur und Inhalt des Datenobjekts gibt. Die Typ-Bezeichnung (Tag) des Datenobjekts wird in definierter Zuordnung zu den Informationsdaten des Datenobjekts in der Farbinformationsdatei abgespeichert. Die Datenobjekte können selbst wieder ein oder mehrere hierarchisch untergeordnete Datenobjekte enthalten, wobei jedes untergeordnete Datenobjekt ebenfalls mit einer dieses charakterisierenden Typ-Bezeichnung (Tag) aus der vordefinierten Menge von Typ-Bezeichnungen (Tags) bezeichnet wird. Den Datenobjekten der obersten Hierarchiestufe und/oder den jeweils einem Datenobjekt untergeordneten Datenobjekten wird ein die betreffenden Datenobjekte bezeichnender Name und eine erläuternde Beschreibung zugeordnet und in definierter Zuordnung zu den betreffenden Datenobjekten in der Farbinfomationsdatei abgespeichert. Einzelne Datenobjekte können auch einen Verknüpfungsverweis (Hyperlink) auf ein anderes Datenobjekt innerhalb oder ausserhalb der Farbinformationsdatei darstellen. Alle Datenobjekte werden in Textform in der Farbinformationsdatei abgespeichert. Datenobjekte können als Informationsdaten auch ein binäres Datenobjekt enthalten, wobei dieses binäre Datenobjekt vorzugsweise in MIME-kompatibler Form in Textzeichen codiert in der Farbinformationsdatei abgespeichert wird.

Die hierarchisch gegliederte Objektstruktur der Datenobjekte wird auf der Grundlage einer Seitenbeschreibungssprache, insbesondere der Extensible Markup Language (XML) gebildet. Dies erlaubt ein universelles, weitestgehend plattformunabhängiges und sprachunabhängiges Datenaustauschformat. Details zu XML sind z.B. in der Addison-Wesley Publikation "XML in der Praxis; Professionellse Web-Publishing mit der Extensible Markup Language" ausführlich dokumentiert..

Die Abspeicherung der zu dem bzw. den Farbmustern gehörenden und diese identifizierenden, charakterisierenden oder ergänzenden Informationsdaten kann mittels einer beliebigen Auswahl aus einer vordefinierten Menge von Datenobjekt-Typen erfolgen, wobei diese Menge von Datenobjekt-Typen jederzeit durch zusätzliche Datenobjekt-Typen erweiterbar ist. Für jeden Datenobjekt-Typ ist die Art und die Struktur der in ihm enthaltenen Informationsdaten festgelegt. Typischerweise sind Datenobjekte für Spektraldaten und farbmetrische Daten (Farbvektoren) und geräteabhängige Farbdaten, Datenobjekte für weitere für den visuellen Farbeindruck relevante Informationsdaten, Datenobjekte für ICC-Profile, Messbedingungen, Lichtquellen-Daten und Geräte-Profile, Datenobjekte für Bild-Daten und/oder ein Substrat beschreibende Daten und Datenobjekte für in Text-Form darstellbare ergänzende Daten vorhanden.

Unter Verwendung dieser vordefinierten Datenobjekt-Typen lässt sich für jedes Farbmuster z.B. eine beliebige Kombination von Emissions-, Remissions- und Transmissionsspektren und/oder farbmetrischen Daten (Farbvektoren) in der Farbinformationsdatei abgespeichern, wobei die herangezogenen Datenobjekt-Typen für die einzelnen Farbmuster eines Farbmustersets auch unterschiedlich sein können.

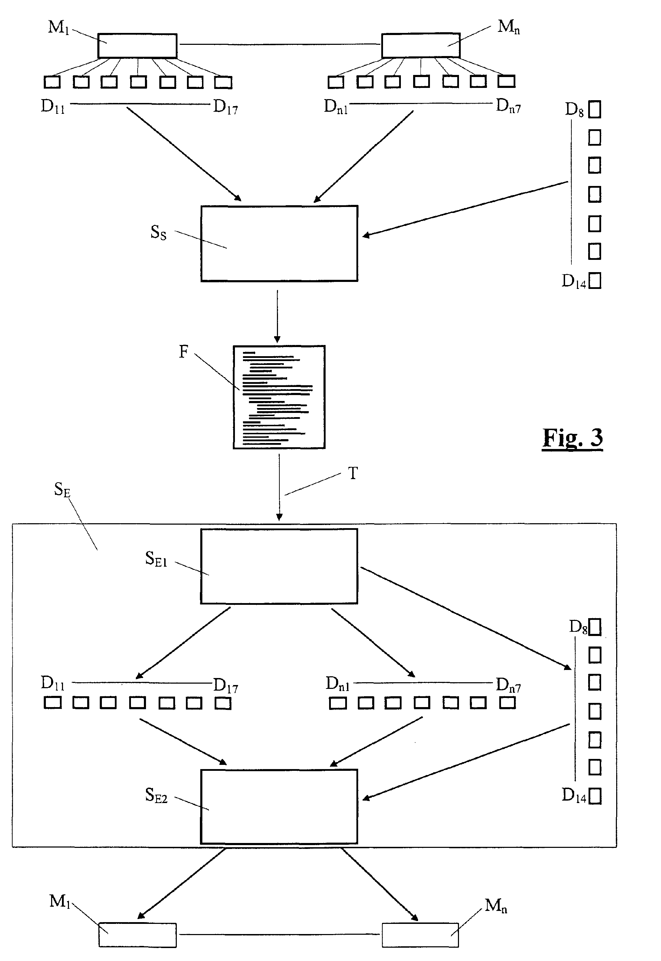

Die Figur 3 zeigt schematisch die prinzipiellen Abläufe des erfindungsgemässen Farbkommunikationsverfahrens.

Sendeseitig wird in der vorstehend beschriebenen Weise aus den die zu kommunizierenden Farbmuster M₁ - Mₙ charakterisierenden Informationsdaten D₁₁ - D₁₇ .... Dₙ₁-Dₙ₇ und den ergänzenden Informationsdaten D₈ - D₁₄ eine Farbinformationsdatei F aufgebaut. Diese Farbinformationsdatei F wird dann mittels eines geeigneten Transportmediums T, z.B. via Internet oder unter Verwendung eines konventionellen Datenträgers, zur Empfangsseite übermittelt und dort einer empfangsseitigen Software S_{E} übergeben. Diese umfasst im wesentlichen zwei Hauptkomponenten S_{E1} und S_{E2}. Die erste Hauptkomponente SE1 liest die Farbinformationsdatei F aus und stellt daraus die ursprünglichen, die zu kommunizierenden Farbmuster M₁ - Mₙ charakterisierenden Informationsdaten D₁₁ - D₁₇ .... Dₙ₁ - Dₙ₇ und die ergänzenden Informationsdaten D₈ - D₁₄ wieder her. Die zweite Hauptkomponente interpretiert die Informationsdaten und erzeugt daraus eine visuelle Darstellung der zugrundeliegenden Farbmuster M₁ - Mₙ. Die visuelle Darstellung der Farbmuster kann z.B. auf einem Bildschirm erfolgen oder auf einem Drucker ausgegeben werden. Die empfangsseitige Software S_{E} kann auch weitere Komponenten enthalten, die eine Umrechnung oder sonstige Manipulation der Informationsdaten und eine entsprechende Visualisierung der manipulierten Daten erlaubt. Näheres dazu ist weiter unten im Detail ausgeführt.

Im einzelnen läuft das Verfahren zur Erzeugung einer Farbinformationsdatei bzw. zur Farbkommunikation typischerweise in folgender Art ab. Mit einem Spektralphotometer oder einem anderen für die Farbmessung geeigneten Gerät werden die ein Farbmuster bzw. dessen Farbe bezeichnenden Messwerte durch einen Anwender erfasst. Alternativ kann der Anwender die Farbe auch in Textform oder einem geräteabhängigen Farbraum ("Device Color Space", z. B. CMYK oder RGB) definieren (Texteingabe oder Eingabe über graphisches Benutzer-Interface). Falls der Anwender die Farbe mit Hilfe eines Messgerätes erfasst, werden die Messdaten von einer zum verwendeten Messgerät gehörigen Software über ein geeignetes Datenauschtauschprotokoll (z. B. das SPM Protokoll der Firma Gretag-Macbeth) vom Messgerät über eine Geräteschnittstelle abgefragt (z. B. Ethernet, USB oder RS 232). Falls der Anwender die Farbe in geräteabhängiger Form definiert, wird er vielfach der Farbe noch ein Geräteprofil zuordnen, um dem System zu erlauben, die geräteabhängige Farbe später in eine geräteunabhängige Farbe umzurechnen. Der Anwender kann darauf wahlweise noch weitere Informationen zu diesem Farbmuster hinzufügen. Typische Informationen sind zum Beispiel Bilder, weitere physikalische Angaben zum die betreffende Farbe erzeugenden Farbmittel (z.B. Drucktinte) wie Gewichte, Dichten, Mengen oder auch kommerzielle Angaben wie Preise u.s.w.. Die Software S stellt dazu ein entsprechendes Benutzerinterface bereit. Die Software stellt dann im nächsten Schritt typischerweise eine Visualisierung der Farbe auf einem Ausgabegerät dar. Für die Farbdarstellung verwendet die Software typischerweise die bekannten Algorithmen / Verfahren, wie sie in Color Management Systemen zur Farbvisualisierung verwendet werden. In vielen Betriebssystemen sind derartige Funktionen eingebaut (z.B. das Software-Paket "ColorSync" in Apple Macintosh Rechnern).

Die Daten werden dann gemäss dem Hauptaspekt der vorliegenden Erfindung in einer von der XML Sprachdefinition abgeleiteten, im folgenden CxF bezeichneten Sprache in der weiter oben prinzipiell skizzierten Weise serialisiert. Auf Details wird weiter unten noch eingegangen. Die serialisierten Daten können dann wahlweise in eine Datei abgespeichert oder in ein anderes, von einem Dritthersteller definiertes Datenobjekt (z.B. eine Text-Datei) eingebettet werden.

Da die so serialisierten Daten in Form einer reinen (z.B. ASCII-) Text-Datei vorliegen, kann diese im Prinzip manuell mittels irgendeines Text-Editors erstellt werden. Vorzugsweise wird man dazu jedoch eine geeignete Software Sₛ verwenden, welche ein vorzugsweise grafisches Benutzer-Interface zur Verfügung stellt, mittels welchem die gewünschten Daten bequem in die CxF Datei eingeschrieben werden können. Solche Software arbeitet im Prinzip wie herkömmliche HTML-Editoren und bedarf deshalb für den Fachmann keiner besonderen Erläuterung. Im folgenden wird diese zur Erstellung einer CxF Datei oder eines entsprechenden CxF Objekts dienende Software S kurz als "CxF Composer" bezeichnet.

Das nachfolgende Beispiel 1 zeigt, wie beispielsweise drei Farbmuster aus dem allgemein bekannten Musterset "PANTONE" mit den Namen "Yellow C", "Warm Red" und "Process Yellow C" in eine Farbinformationsdatei abgespeichert werden. Zur ersten Farbe werden dabei im wesentlichen die Lab-Werte mit Referenz auf die entsprechenden Messbedingungen, ein Verweis auf eine "Named Color" (Pantone Name der Farbe) mit Referenz auf Messbedingungen und die spektralen Messwerte mit Referenz auf Messbedingungen gespeichert. Zur zweiten Farbe wird ein "Spektrum" von 36 spektralen Messwerten sowie eine Referenz auf die entsprechenden Messbedingungen abgespeichert. Zum dritten Muster (Sample) werden ein Spektrum, ein XYZ-Wert, ein RGB-Wert mit zugeordnetem ICC Profil in die Datei abgelegt bzw. gespeichert. Im Anschluss an die Beschreibung der Muster werden die Messbedingungen und das oben referenzierte ICC Geräteprofil gespeichert. Spezieller Beachtung dient dabei der Aspekt, dass in dem gewählten Datenspeicherungsformat zu jedem Farbmuster beliebige, d.h. nicht von anderen Farbmustern abhängige Information gespeichert werden kann. Wie aus nachfolgendem Beispiel ersichtlich ist, wird dabei jedes zu speichernde Datenobjekt wie auch in anderen von XML abgeleiteten Sprachen durch ein sog. "Tag" der Form "<Tagname>" eingeleitet, wobei "Tagname" stellvertretend für den aktuellen Namen des jeweiligen Tags steht. Danach folgt ein Datenblock. Am Schluss wird das Objekt durch "</Tagname>" abgeschlossen.

Der Datenblock selbst kann dann wieder beliebig verschachtelte Unterobjekte enthalten, die in rekursiver Art in die Datei einkodiert werden. Um Speicherplatz zu sparen und die Universalität zu erhöhen, können an den Stellen in der Datei, wo immer das gleiche Objekt eingebettet werden müsste, alternativ Verweise auf andere Stellen der Datei eingebettet werden. Diese an sich bekannte Technik wird hier zum Beispiel für die Speicherung der physikalischen Messbedingungen der Farbmuster verwendet ("U-niqueID1").

### Beispiel 1:

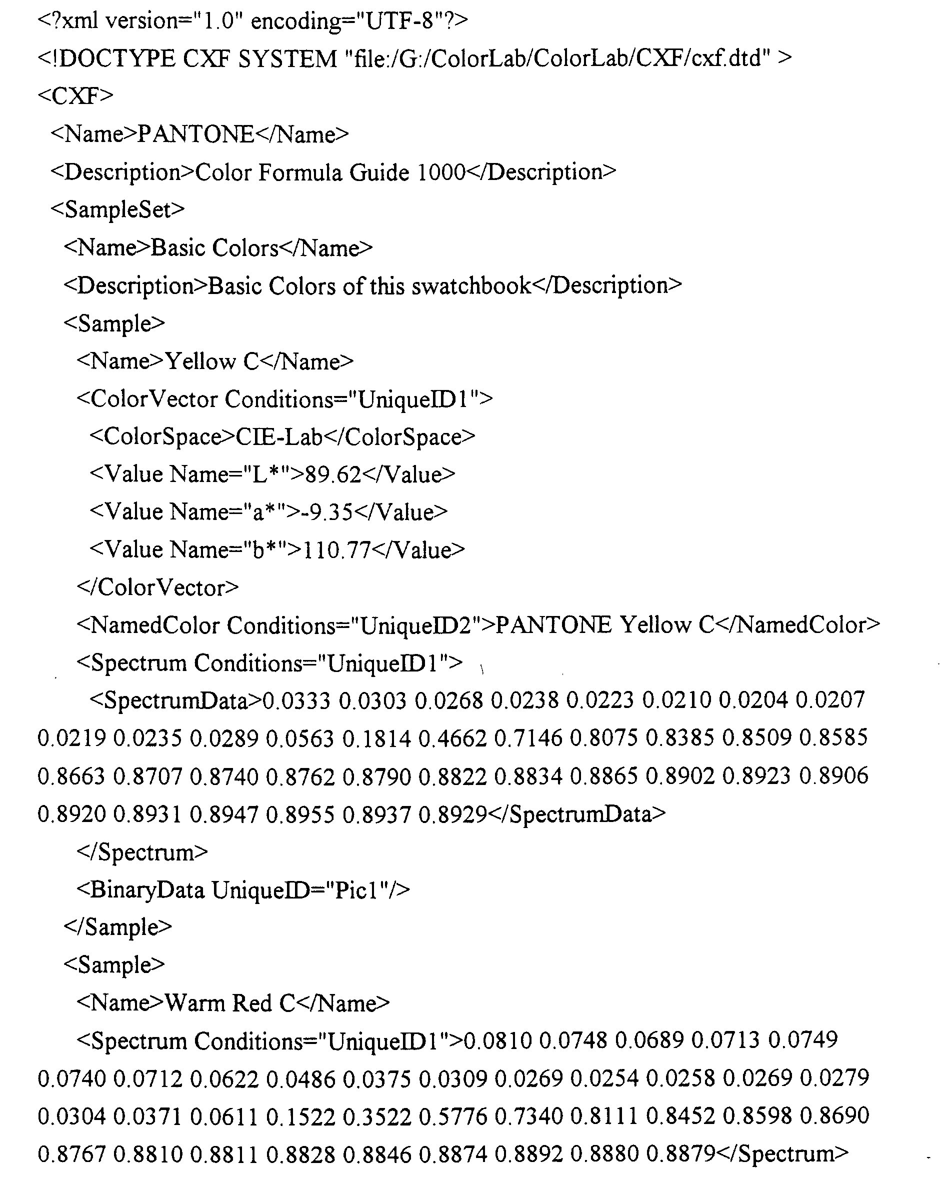

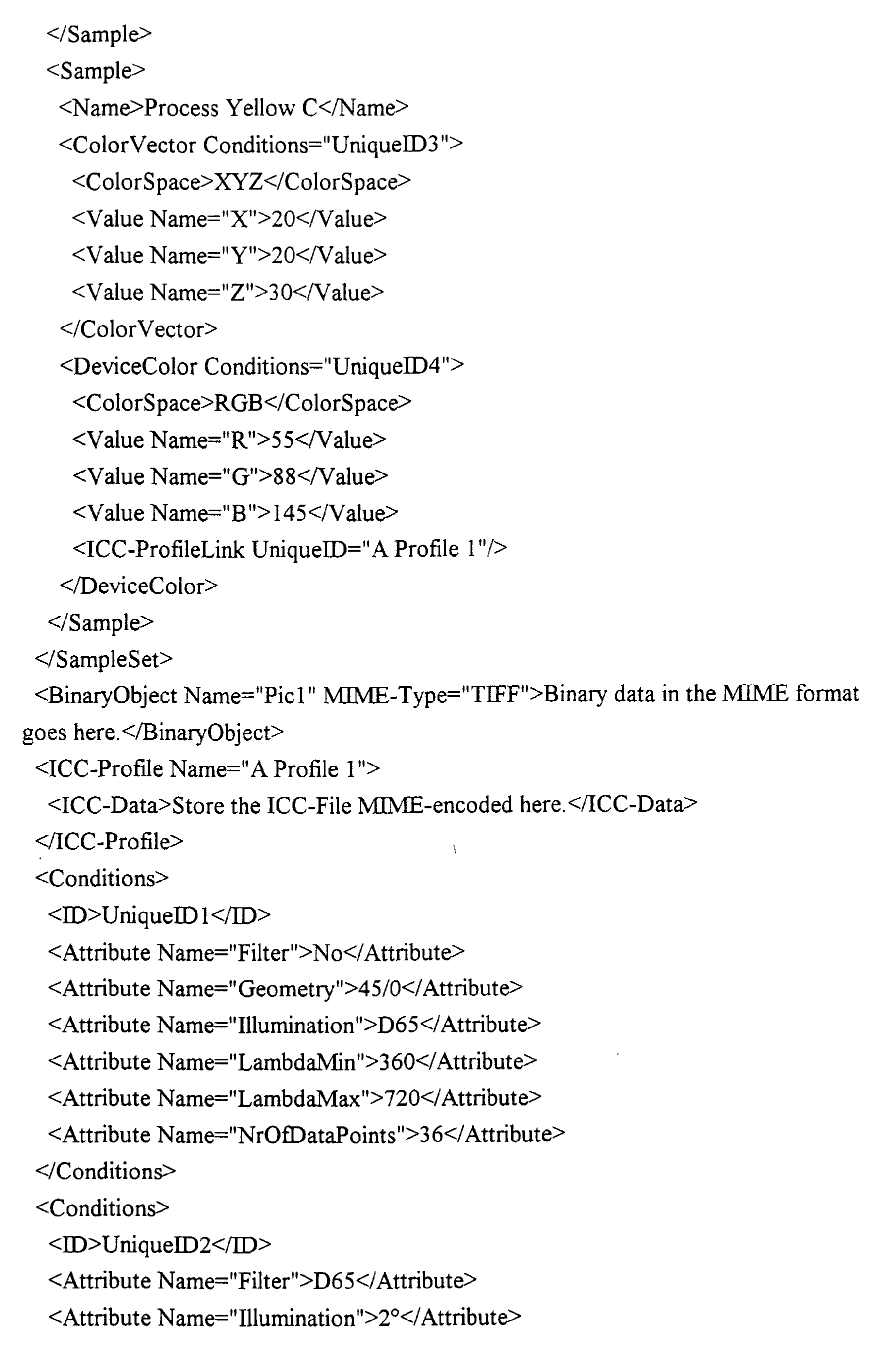

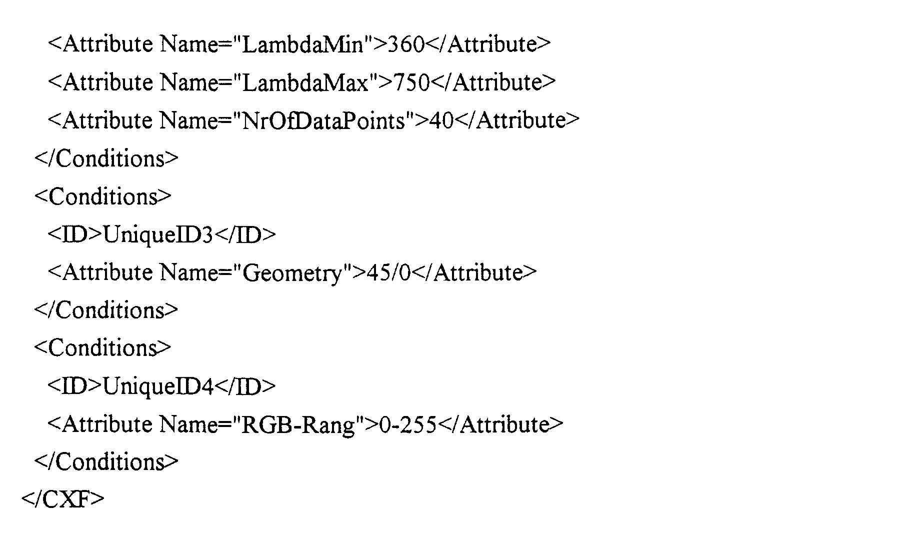

Die in das Dateiformat eingebetteten Objekte (z. B. ICC Profile, Bilder) werden dabei in eine Textdarstellung umkodiert. Dazu kann z. B. ein MIME kompatibles Datenformat für derartige Objekte verwendet werden.

Die Beschreibung der in einer XML kodierten Datei enthaltenen Objekte und Attribute erfolgt am einfachsten durch eine an sich bekannte Dokument-Typ-Definitions-Datei (DTD). In Figur 1 ist ein Beispiel einer graphischen Repräsentation einer beispielsweisen Version der DTD für das im erfindungsgemässen Verfahren verwendete Farbaustauschformat (Color Exchange Format) CxF dargestellt. In textueller Form würde eine CxF Datei bzw. ein CxF Objekt wie folgt syntaktisch in DCD umschrieben:

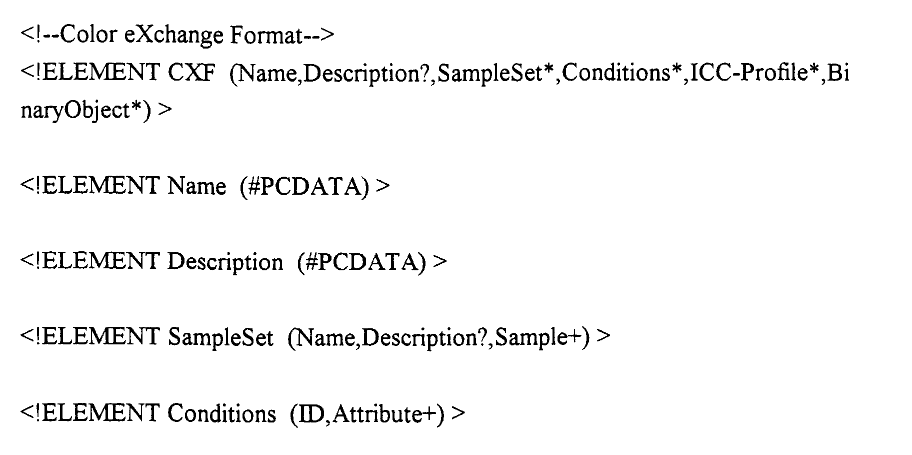

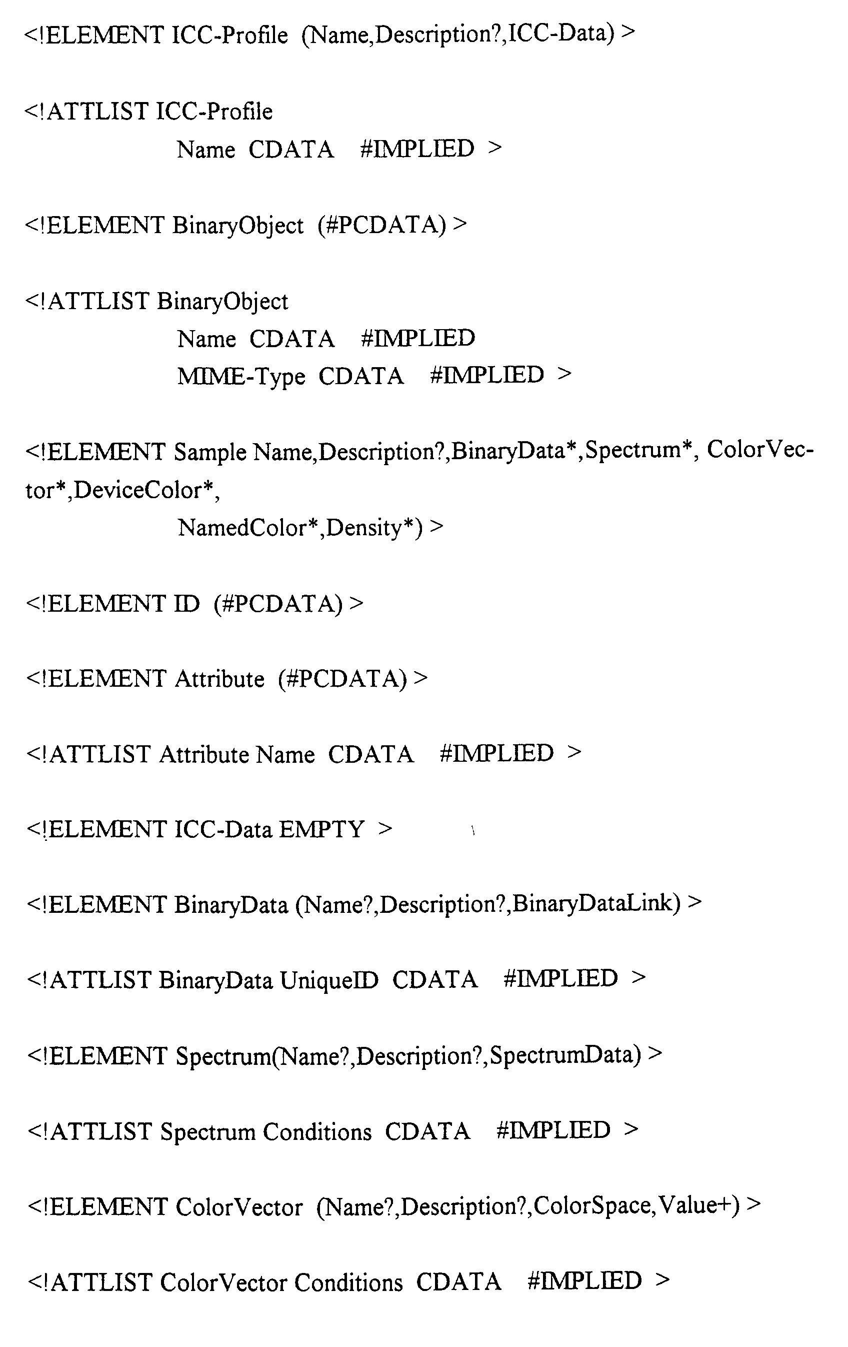

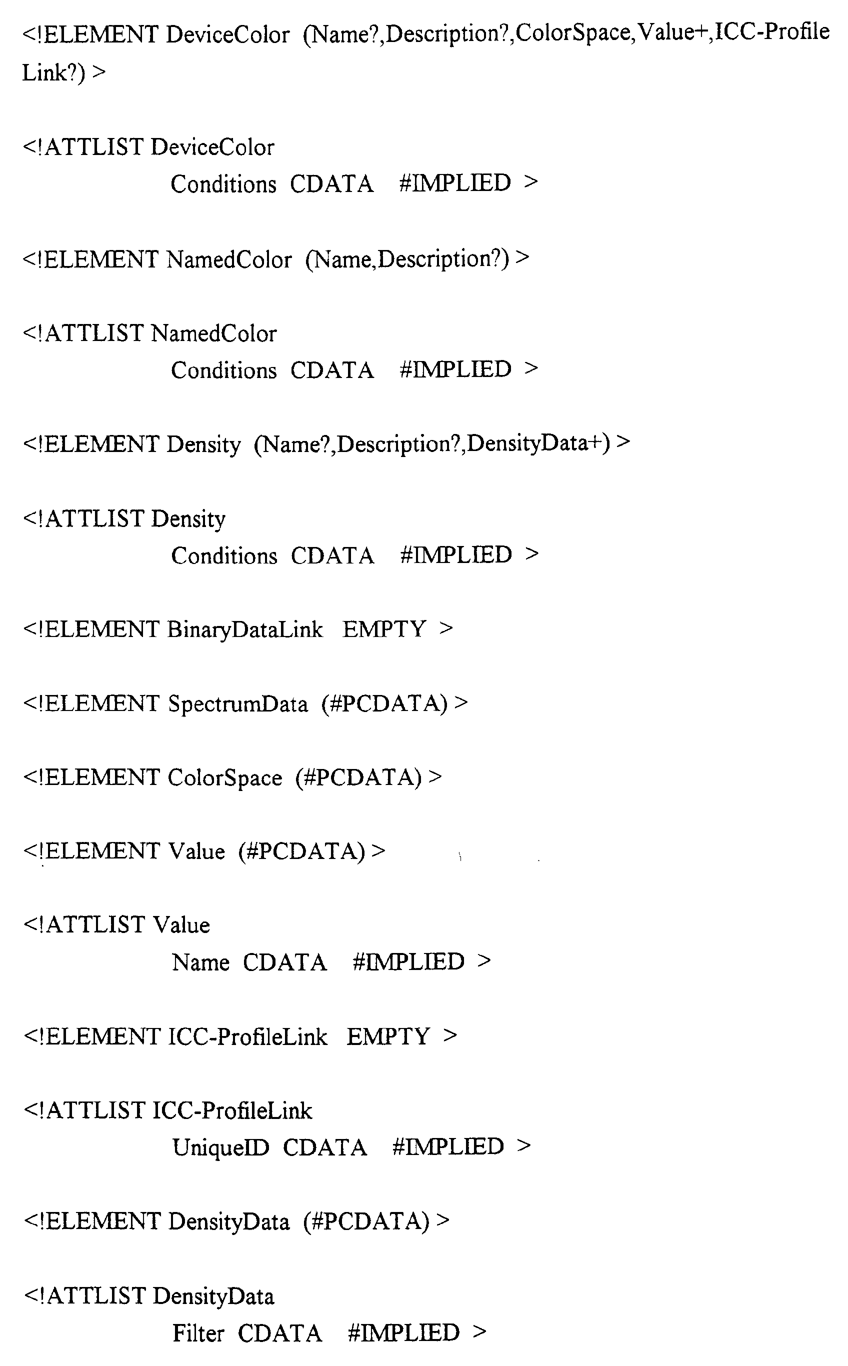

Es ist dabei jederzeit möglich, das Dateiformat durch weitere gewünschte neue Attribute zu ergänzen. Es müssten dazu lediglich entsprechende neue Tags definiert und dann der Datei hinzugefügt werden. Diese Ergänzung kann dabei durch denjenigen Anwender (Hersteller von Anwendungssoftware) erfolgen, der auf Grund seiner Bedürfnisse zusätzliche Information zu dem Datenobjekt ablegen muss. Durch die gewählte Datenablage-Struktur werden dabei sämtliche Anwendungen, die auf das bisherige Datenaustauschformat zurückgreifen, nicht beeinflusst. D.h. wenn eine Anwendung ein bestimmtes Attribut einer Farbe nicht interpretieren kann, wird die Anwendung das Attribut einfach überspringen. Sollte es sich für eine Anwendung zum Beispiel als vorteilhaft erweisen, zu einem Farbmuster das entsprechende Substrat zu definieren, könnten beispielsweise das Elemente "Sample" einfach durch eine erweiterte Definition ersetzt werden, die die Daten oder eine Referenz auf die Daten eines Substrates enthält.

Die Speicherung selbst erfolgt durch ein Software-Paket (Softwarebibliothek, nachfolgend CxF SDK genannt). Die Softwarebibliothek besteht dabei im wesentlichen aus 4 Schichten (Layers). Der unterste Layer ("CxF- file") steht für das eigentliche Fileformat. Der Layer zwei besitzt die Funktionalität, Dateien oder in andere Dateien eingebettete CxF Datenbobjekte in den Hauptspeicher eines Computers einzulesen. Dabei wird eine Baumstruktur aufgebaut, die der Dateistruktur entspricht. Es kann auf Attribute dieser Baumstruktur zuzugreifen werden. Der dritte Layer ("CxF - colorimetric data") erlaubt die Interpretation dieser Attribute als farbmetrische Werte. Der zu oberst liegende vierte Layer ("CxF - appearance data") bietet die Möglichkeit, die auf dem dritten Layer gewonnenen farbmetrischen Werte entsprechend einem gewählten Appearance Modell umzurechnen und beispielsweise auf einem Bildschirm in den abgeleiteten RGB Daten darzustellen. Die Schichten (Layer)-Struktur der SoftwareBibliothek ist in der nachstehenden Tabelle veranschaulicht.

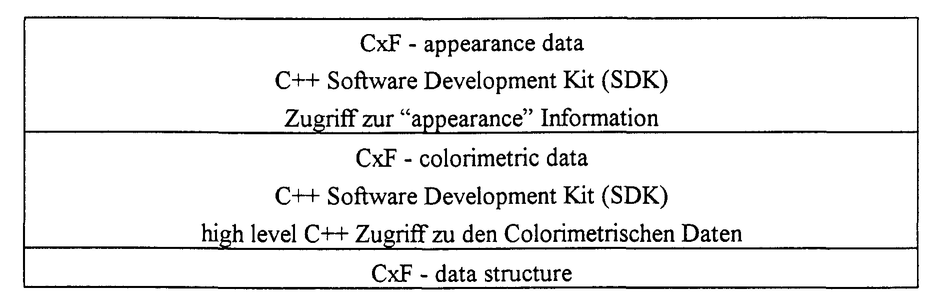

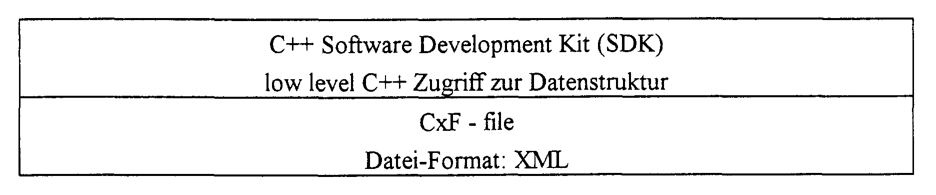

Eine spezielle Eigenschaft des obersten, vierten Layers ist, dass der Layer aus mehreren unabhängigen Modulen bestehen kann, wobei jedes der Module einen Aufgabenbereich abdeckt. Dies wird in der nachfolgenden Tabelle dargestellt. Ein erstes Modul bietet beispielsweise Color Management Funktionalität für die übergeordneten Anwendungsprogramme, zB. Die Color Management Software "LTT" der Firma Logo. Ein zweites Modul kann eine Farbrezeptur-Software darstellen und dabei z. B. Appearance Transformationen von Farbwerten für den Metallic-Lack Bereich bieten. Ein weiteres Modul kann Texturen simulieren, u.s.w..

| CMM (LTT von Logo) | Farbrezeptur (InkForm Engine) | Textur Simulation Software | weitere Software |
|---|---|---|---|
| Layer 3 | | | |
| Layer 2 | | | |
| Layer 1 | | | |

Nachdem die Serialisierung des Farbinformation im erwähnten Color Exchange Format CxF z.B mittels der CxF Composer Software erfolgt ist, kann der entsprechende Datenstrom entweder in ein Datenobjekt irgendeiner Software-Anwendung eines Fremdherstellers eingebettet werden oder der Datenstrom kann in einer Datei gespeichert werden. Diese Datei wird dann über ein geeignetes Transportmedium (Diskette, CD-ROM, FTP, E-Mail, Internet) an den Ort des Empfängers übermittelt. Der Empfänger lädt diese CxF Datei und visualisiert die übertragenen Farbdaten mit Hilfe einer geeigneten Betrachtungs-Software ("CxF Viewer") S_{E} auf dem Bildschirm. Dabei kommen wieder die bereits weiter oben und z.B. auch im CxF Composer verwendeten Mechanismen zur farbrichtigen Darstellung zur Anwendung (z. B. Apple ColorSync). Alternativ kann der Benutzer dann die Farben auf einem Ausgabegrät ausdrucken. Auch für den Ausdruck werden dabei die Farbdarstellungen durch Verwendung von Color Management Mechanismen (z.B. "ColorSync" bei Apple Macintosh Rechnern) an das Ausgabegerät angepasst.

Ein rechnerunterstütztes System, mit welchem das erfindungsgemässe Verfahren zur Erzeugung einer Farbinformationsdatei bzw. zur Farbkommunikation durchgeführt werden kann, umfasst typischerweise die folgenden Komponenten:
- Ein Spektralphotometer oder ein anderes zur Erfassung von farbmetrischen Werten geeignetes Farbmessgerät
- eine Softwarebibliothek, die erlaubt, die zu Farbobjekten, d.h. zu einer Farbe gehörenden Daten und deren Zusatzattribute im oben erläuterten Dateiformat (CxF Format) zu speichern bzw. zu lesen
- eine Anwendungssoftware, die dem Anwender erlaubt, beliebige Farbmuster messtechnisch oder textuell in einem geräteunabhängigen oder geräteabhängigen Farbraum zu erfassen und den derart definierten Farbmustern zusätzliche Attribute zuzuweisen (CxF Composer)
- ein geeignetes Datentransportmedium (z. B. das Internet, ggf. via E-Mail, bzw. ein konventioneller Datenträger)
- eine Viewer Komponente, die erlaubt, die Farbinformation auf einem Ausgabegerät (z. B. CRT, LCD, Beamer oder Drucker ..) darzustellen (CxF Viewer)
- ein Color Management System, das erlaubt, die Farbdarstellung auf den Ausgabegeräten (Bildschirmen, Druckern) konsistent zu halten (z. B.Apple ColorSync)
- einen geeigneten Drucker, der erlaubt, Farbmuster und deren Attribute auszugeben
- sowie wahlweise ein Appearance Modellierungssystem, das erlaubt, Appearance Aspekte der Farbmuster darzustellen.

Diese Komponenten sind an sich bekannt bzw. weiter oben beschrieben, so dass sich eine nähere Erläuterung erübrigt.

Die Erfindung betrifft auch ein Programm zur Durchführung der offenbarten und beanspruchten Verfahren mit einem Computer sowie ein Speichermedium mit dem Programm.

## Patentansprüche

1. Verfahren zur Erzeugung einer elektronischen Farbinformationsdatei für die Farbkommunikation, welche Datei wenigstens einen den Farbeindruck eines oder mehrerer Farbmuster beschreibenden Datensatz enthält, wobei der mindestens eine Datensatz in einem Rechner zur Verfügung gestellt und in der Farbinformationsdatei in einem vorbestimmten Datenformat abgespeichert wird, **dadurch gekennzeichnet, dass** alle zu dem bzw. den Farbmustern gehörenden und diese identifizierenden, charakterisierenden oder ergänzenden Informationsdaten als die Informationsdaten enthaltende Datenobjekte in einer offenen und erweiterbaren hierarchisch gegliederten Objektstruktur in der Farbinformationsdatei abgespeichert werden.

2. Verfahren nach Anspruch 1, **dadurch gekennzeichnet, dass** jedes Datenobjekt mit einer dieses charakterisierenden Typ-Bezeichnung (Tag) aus einer vordefinierten Menge von Typ-Bezeichnungen (Tags) bezeichnet wird, wobei die Typ-Bezeichnung Aufschluss über Struktur und Inhalt des Datenobjekts gibt, und dass die Typ-Bezeichnung (Tag) des Datenobjekts in definierter Zuordnung zu den Informationsdaten des Datenobjekts in der Farbinformationsdatei abgespeichert wird.

3. Verfahren nach einem der vorangehenden Ansprüche, **dadurch gekennzeichnet, dass** zumindest ein Datenobjekt selbst ein oder mehrere hierarchisch untergeordnete Datenobjekte enthält, wobei jedes untergeordnete Datenobjekt mit einer dieses charakterisierenden Typ-Bezeichnung (Tag) aus einer vordefinierten Menge von Typ-Bezeichnungen (Tags) bezeichnet wird, wobei die Typ-Bezeichnung Aufschluss über Struktur und Inhalt des Datenobjekts gibt, und dass die Typ-Bezeichnung (Tag) des untergeordneten Datenobjekts in definierter Zuordnung zu den Informationsdaten des untergeordneten Datenobjekts in der Farbinformationsdatei abgespeichert wird.

4. Verfahren nach Anspruch 3, **dadurch gekennzeichnet, dass** den Datenobjekten der obersten Hierarchiestufe und/oder den jeweils einem Datenobjekt untergeordneten Datenobjekten ein die betreffenden Datenobjekte bezeichnender Name zugeordnet und in definierter Zuordnung zu den betreffenden Datenobjekten in der Farbinfomationsdatei abgespeichert wird.

5. Verfahren nach Anspruch 3 oder 4, **dadurch gekennzeichnet, dass** den Datenobjekten der obersten Hierarchiestufe und/oder den jeweils einem Datenobjekt untergeordneten Datenobjekten eine die betreffenden Datenobjekte erläuternde Beschreibung zugeordnet und in definierter Zuordnung zu den betreffenden Datenobjekten in der Farbinfomationsdatei abgespeichert wird.

6. Verfahren nach einem der vorangehenden Ansprüche, **dadurch gekennzeichnet, dass** mindestens ein Datenobjekt ein untergeordnetes Datenobjekt enthält, welches einen Verknüpfungsverweis (Hyperlink) auf ein anderes Datenobjekt innerhalb oder ausserhalb der Farbinformationsdatei darstellt.

7. Verfahren nach einem der vorangehenden Ansprüche, **dadurch gekennzeichnet, dass** alle Datenobjekte in Textform in der Farbinformationsdatei abgespeichert werden.

8. Verfahren nach einem der vorangehenden Ansprüche, **dadurch gekennzeichnet, dass** mindestens ein Datenobjekt als Informationsdaten ein binäres Datenobjekt enthält, wobei dieses binäre Datenobjekt vorzugsweise in MIME-kompatibler Form in Textzeichen codiert in der Farbinformationsdatei abgespeichert wird.

9. Verfahren nach einem der vorangehenden Ansprüche, **dadurch gekennzeichnet, dass** die hierarchisch gegliederte Objektstruktur der Datenobjekte auf der Grundlage einer Seitenbeschreibungssprache, insbesondere der Extensible Markup Language (XML) gebildet wird.

10. Verfahren nach Anspruch 2 oder 3, **dadurch gekennzeichnet, dass** die Abspeicherung der zu dem bzw. den Farbmustern gehörenden und diese identifizierenden, charakterisierenden oder ergänzenden Informationsdaten mittels einer beliebigen Auswahl aus einer vordefinierten Menge von Datenobjekt-Typen erfolgt.

11. Verfahren nach Anspruch 10, **dadurch gekennzeichnet, dass** die vordefinierte Menge von Datenobjekt-Typen durch zusätzliche Datenobjekt-Typen erweiterbar ist.

12. Verfahren nach Anspruch 10, **dadurch gekennzeichnet, dass** die vordefinierte Menge von Datenobjekt-Typen mindestens Datenobjekte für Spektraldaten und farbmetrische Daten (Farbvektoren) und ggf. geräteabhängige Farbdaten umfasst.

13. Verfahren nach Anspruch 12, **dadurch gekennzeichnet, dass** die vordefinierte Menge von Datenobjekt-Typen zusätzlich Datenobjekte für weitere für den visuellen Farbeindruck relevante Informationsdaten umfasst.

14. Verfahren nach einem der Ansprüche 12-13, **dadurch gekennzeichnet, dass** die vordefinierte Menge von Datenobjekt-Typen zusätzlich Datenobjekte für ICC-Profile, Messbedingungen, Lichtquellen-Daten und Geräte-Profile umfasst.

15. Verfahren nach einem der Ansprüche 12-14, **dadurch gekennzeichnet, dass** die vordefinierte Menge von Datenobjekt-Typen zusätzlich Datenobjekte für Bild-Daten umfasst.

16. Verfahren nach einem der Ansprüche 12-15, **dadurch gekennzeichnet, dass** die vordefinierte Menge von Datenobjekt-Typen zusätzlich Datenobjekte für Bild-Daten und/oder ein Substrat beschreibende Daten umfasst, wobei die Bild-Daten vorzugsweise Strukturinformationen wie Oberflächenbeschaffenheit oder Körnigkeit der zu kommunizierenden Farbmuster repräsentieren.

17. Verfahren nach einem der Ansprüche 12-16, **dadurch gekennzeichnet, dass** die vordefinierte Menge von Datenobjekt-Typen zusätzlich Datenobjekte für in Text-Form darstellbare ergänzende Daten umfasst.

18. Verfahren nach einem der vorangehenden Ansprüche, **dadurch gekennzeichnet, dass** eine beliebige Kombination von Emissions-, Remissions- und Transmissionsspektren und/oder farbmetrischen Daten (Farbvektoren) in der Farbinformationsdatei abgespeichert wird.

19. Verfahren nach Anspruch 18, **dadurch gekennzeichnet, dass** in der Farbinformationsdatei Emissionsspektren einer Beleuchtungslichtquelle und Remissionsspektren der Farbmuster gespeichert werden, so dass anhand eines Farbmodells die Beleuchtungslichtquelle in die visuelle Darstellung der Farbmuster auf einem Bildschirm mit einbezogen werden kann.

20. Verfahren nach Anspruch 14, **dadurch gekennzeichnet, dass** zu einem Farbmuster ein Eingabeprofil und vorzugsweise mehrere Ausgabeprofile zugeordnet und in der Farbinformationsdatei abgespeichert werden, welches Eingabeprofil dazu dient, ein Farbmuster von einem geräteabhängigen Farbraum in einen geräteunabhängigen Farbraum umzurechnen und welche Ausgabeprofile dazu dienen, den Farbort des Farbmusters von diesem geräteunabhängigen Farbraum in einen gewählten geräteabhängigen Farbraum umzurechnen und darzustellen.

21. Verfahren zur Kommunikation der für den visuellen Farbeindruck relevanten Information eines mindestens ein Farbmuster enthaltenden Farbmustersatzes, wobei die durch Messdaten und/oder manuelle erzeugte Wertedaten repräsentierte Information sendeseitig in einer Farbinformationsdatei abgespeichert wird, diese Farbinformationsdatei über ein Kommunikationsmedium zu einem Empfänger übertragen wird und empfangsseitig in visueller Form wieder dargestellt wird, **dadurch gekennzeichnet, dass** dass alle zu dem bzw. den Farbmustern gehörenden und diese identifizierenden, charakterisierenden oder ergänzenden Informationsdaten als die Informationsdaten enthaltende Datenobjekte in einer offenen und erweiterbaren hierarchisch gegliederten Objektstruktur in der Farbinformationsdatei abgespeichert werden.

22. Kommunikationsverfahren nach Anspruch 21 und einem der Ansprüche 2-9.

23. Kommunikationsverfahren nach Anspruch 22, **dadurch gekennzeichnet, dass** eine vordefinierte Menge von Datenobjekt-Typen bereitgestellt wird, welche Art und Struktur von typischen ein Farbmuster identifizierenden, charakterisierenden oder ergänzenden Informationsdaten definieren, und dass eine beliebige Auswahl von Datenobjekt-Typen aus der vordefinierten Menge von Datenobjekt-Typen oder eine beliebige Kombination dieser Datenobjekt-Typen für die Abspeicherung der zu dem bzw. den Farbmustern gehörenden und diese identifizierenden, charakterisierenden oder ergänzenden Informationsdaten herangezogen wird.

24. Kommunikationsverfahren nach Anspruch 23 und einem der Ansprüche 12-15.

25. Kommunikationsverfahren nach Anspruch 23 und Anspruch 16, **dadurch gekennzeichnet, dass** unter Verwendung eines Datenobjekts für Bild-Daten und/oder ein Substrat beschreibende Daten Strukturinformationen wie Oberflächenbeschaffenheit oder Körnigkeit der zu kommunizierenden Farbmuster in der Farbinformationsdatei gespeichert werden.

26. Kommunikationsverfahren nach Anspruch 23 und Anspruch 18.

27. Kommunikationsverfahren nach Anspruch 26, **dadurch gekennzeichnet, dass** in der Farbinformationsdatei Emissionsspektren einer Beleuchtungslichtquelle und Remissionsspektren der Farbmuster gespeichert werden, und dass empfangsseitig anhand eines Farbmodells und der abgespeicherten Emissionsspektren die Beleuchtungslichtquelle in die visuelle Darstellung der Farbmuster auf einem Bildschirm mit einbezogen wird.

28. Kommunikationsverfahren nach Anspruch 24, **dadurch gekennzeichnet, dass** einem Farbmuster ein Eingabeprofil und vorzugsweise mehrere Ausgabeprofile zugeordnet und in der Farbinformationsdatei abgespeichert werden, dass anhand des Eingabeprofils ein Farbmuster von einem geräteabhängigen Farbraum in einen geräteunabhängigen Farbraum umgerechnet wird, und dass anhand der Ausgabeprofile der Farbort des Farbmusters von diesem geräteunabhängigen Farbraum in einen gewählten geräteabhängigen Farbraum umgerechnet und dargestellt wird.
